# EUROPÄISCHE PATENTSCHRIFT

(11) **EP 0 693 345 B1**
(45) Veröffentlichungstag und Bekanntmachung des Hinweises auf die Patenterteilung: **10.11.1999**
(21) Anmeldenummer: 95106322.1
(22) Anmeldetag: 27.04.1995
(51) Int. Cl.: B23Q 1/01, B23Q 11/00, B23Q 3/157, B23Q 11/08

(54) **Werkzeugmaschine**
Machine tool
Machine-outil

(30) Priorität: 02.05.1994 DE 4415153
(43) Veröffentlichungstag der Anmeldung: 24.01.1996
(73) Patentinhaber: Heckert Werkzeugmaschinen GmbH, 09117 Chemnitz (DE)
(72) Erfinder: Hansch, Stefan, Dr., D-09227 Einsiedel (DE); Flade, Mike, D-09112 Chemnitz (DE)
(74) Vertreter: Rumrich, Gabriele

(56) Entgegenhaltungen:
- EP-A- 0 249 742
- EP-A- 0 259 637
- EP-A- 0 333 699
- DE-A- 3 721 610
- DE-U- 8 814 245
- US-A- 3 978 978
- US-A- 4 792 267

## Beschreibung

Die Erfindung betrifft eine Werkzeugmaschine, insbesondere Fräs-Bearbeitungszentrum, mit einem eine Arbeitsspindel aufnehmenden Ständer, einer zwischen der Arbeitsspindel und einem Werkzeugmagazin Werkzeuge wechselnden Werkzeugwechseleinrichtung und einem auf einem Bett horizontal geführten waagerechten Werkstücktisch, dessen Führungen sich auf unterschiedliche Höhen eines unter dem Werkstücktisch angeordneten geneigten ersten Bettabschnitts verteilen, wie z.B. aus DE-U-88 14 245 bekannt.

Die Betten solcher Maschinen weisen in ihren Querschnitten die gleichen geschlossenen Rechteckformen auf. Sie garantieren eine hohe Steife, lassen aber kaum Raum für eine effektive Entsorgung. Die Späne verbleiben auf den im wesentlichen waagerechten Führungsbahnabdeckungen oder werden, bei langen Achsen, durch beidseitig des Tisches angeordnete Spänepaddel innerhalb des Arbeitsraumes transportiert. Ein Aufheizen der Maschine und Störungen des automatischen Betriebs sind die Folgen.

Lösungen, die eine effektive Entsorgung durch seitliche Führung vertikaler oder horizontaler Werkstücktische organisieren, sind aufgrund der hohen Kippmomente auf kleine Werkstückgrößen begrenzt. Bei einem bekannten Bearbeitungszentrum zur Bearbeitung kleiner prismatischer Teile (DD 292401) sind die Führungen einer über einem Späneraum geführten Werkstückträgerbaugruppe mit vertikaler Tischfläche an einem senkrechten Gestellschenkel angeordnet. Eine andere bekannte Werkzeugmaschine (DE 3031317) weist einen Schlitten auf, dessen eine Seite die senkrechten Führungen für einen senkrechten Werkstückträger trägt und dessen gegenüberliegende Seite auf Führungen eines dreieckförmigen Schrägbettes läuft. Schließlich ist eine Universalwerkzeugmaschine (DE 3721610) bekannt, bei der ein senkrechter Rund- und Drehtisch ohne Zwischenschalten senkrechter Führungen auf der führungsabgewandten Seite eines Schlittens angeordnet ist. Die Führung wird hierbei durch die freie Schrägfläche eines im Winkel zwischen Bett und Ständer angeordneten dreieckigen Blockes gebildet. Den zuletzt genannten Lösungen ist außer der seitlichen Führung vertikaler Werkstücktische ein bestückungsseitig ungünstiger Überflur-Werkzeugwechsel gemeinsam.

Die DE-U-88 14 245 zeigt eine Werkzeugmaschine mit
- einem Ständer für ein in der horizontalen z-Achse und in der vertikalen y-Achse verfahrbares Spindelgehäuse mit einer horizontalen Arbeitsspindel,
- einem sich vor dem Ständer in x-Richtung erstreckenden Bett, das auf seiner sich vom Ständer weg schräg nach vorn neigenden Oberseite Führungen trägt, die unter dem Werkstücktisch verlaufen und schräg nach vom geneigte Lastaufnahmeflächen aufweisen, und
- einer Werkzeugwechseleinrichtung, die, an einem bettparallelen Portal hängend, zwischen der Arbeitsspindel und einem separaten Werkzeugmagazin geführt ist.
Die Werkzeugmaschine besitzt eine geringe Steife. Diese ergibt sich einerseits daraus, daß das Bett nur einen kleinen dreieckigen Querschnitt und eine einachsige Ausdehnung (x) aufweist. Andererseits, sind die Führungen Momenten ausgesetzt, die aus dem Gewicht des beladenen Werkstücktisches und aus den orthogonal angreifenden Bearbeitungskräften resultieren. Der Überflur-Werkzeugwechsel ist konstruktiv aufwendig und erschwert die Bestückung des Werkzeugmagazins.

Der Erfindung liegt daher die Aufgabe zugrunde, eine Werkzeugmaschine nach dem Oberbegriff des Hauptanspruches zu schaffen, die, unabhängig von der Werkstückgröße, eine hohe Steife mit effektiven Formen der Entsorgung und des Werkzeugwechsels verbindet.

Erfindungsgemäß wird diese Aufgabe durch die vom Oberbegriff des Hauptanspruchs ausgehenden kennzeichnenden Merkmale gelöst, dessen Unteransprüche die Erfindung weiter ausbilden.

Auf den vorzugsweise waagerechten Lastaufnahmeflächen der unter dem Werkstücktisch in unterschiedlichen Höhen angeordneten Tischführungen können hohe Lasten aufgenommen werden. Der diese Führungen aufnehmende geneigte erste Bettabschnitt ist erfindungsgemäß Teil eines (nach oben offenen) Profils, dessen eine Stirnseite von der Längsseite eines zweiten Bettabschnittes abgeschlossen wird, der den Ständer aufnimmt, welcher vorzugsweise in einer zur Tischbewegung (z) senkrechten Richtung (x) bewegbar ist. Diese Anordnung führt (bei einer bevorzugten Neigung zur Waagerechten von wenigstens 35 Grad) unter dem Einfluß der Schwerkraft die unmittelbar am Werkstücktisch und im übrigen Arbeitsraum anfallenden Späne am Fuße des geneigten ersten Bettabschnittes zusammen, von wo sie durch einen Spänetransporter, der auf der ständerabgewandten Seite über einem an sich bekannten Späneförderersystem mündet, aus der Maschine heraustransportiert werden. Diese Anordnung verkörpert aber auch eine hohe Steife des Gesamtsystems, die sich noch steigern läßt, indem man an den geneigten ersten Bettabschnitt (der vorzugsweise etwa mittig auf den zweiten Bettabschnitt stößt) in x-Richtung einen fünften Bettabschnitt anschließt, der mit dem zweiten Bettabschnitt eine L-förmige Deckfläche bildet und (außerhalb des Arbeitsraumes) eine weitere Maschinenbaugruppe, beispielsweise die Werkzeugwechseleinrichtung, aufnimmt.

Die Erfindung wird nachstehend anhand eines Ausführungsbeispieles näher erläutert. In den zugehörigen Zeichnungen zeigen:

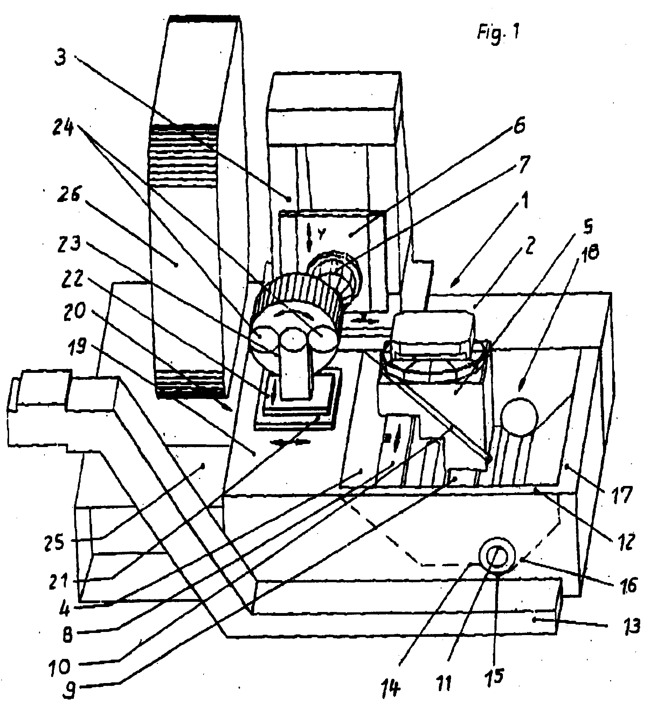

- Fig. 1: die schematische Darstellung eines erfindungsgemäßen Fräs-Bearbeitungszentrums.

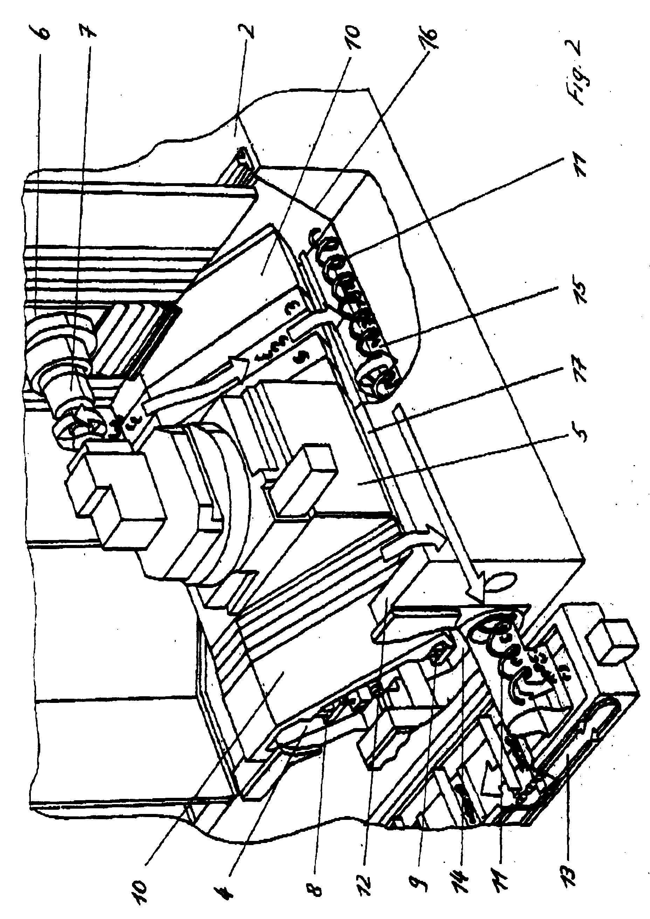

- Fig. 2: einen Ausschnitt aus Fig. 1 mit der Späneentsorgung

Das Bett 1 nimmt auf dem eine geschlossene kubische Form aufweisenden Bettabschnitt 2 den in x-Richtung mittels nichtdargestelltem Antrieb verfahrbaren Ständer 3 und auf dem geneigten Bettabschnitt 4, der im Querschnitt ein auf ein Rechteck aufgesetztes rechtwinkliges Dreieck mit horizontal und vertikal verlaufenden Katheten bildet, den in z-Richtung mittels nichtdargestelltem Antrieb verfahrbaren Tisch 5 auf. Am Ständer 3 ist ein in y-Richtung mittels nichtdargestelltem Antrieb verschieblicher Spindelstock 6 mit horizontaler Arbeitsspindel 7 angeordnet. Der Tisch 5 ist auf z-parallelen Führungen 8 und 9 geführt, die waagerechte Lastaufnahmeflächen aufweisen, im oberen Drittel bzw. am Fuße des geneigten Bettabschnittes 4 angeordnet sind und von der in gleicher Richtung geneigten Führungsbahnabdeckung 10 geschützt werden. Andere Ausbildungen des Bettabschnittes 4 sind erfaßt, sofern die Führungen 8, 9 unterschiedlich hoch sind. Die Führungsbahnabdeckung endet über einer etwa z-parallel angeordneten Transportschnecke 11, die einen schmalen ständerabgewandten Bettabschnitt 12 durchgreift und an einen Späneförderer 13 heranführt. Die Anordnung von Tischführungen 8 und 9, Führungsbahnabdeckung 10 und Transportschnecke 11 spiegelt sich im Bettprofil dadurch wider, daß sich an den geneigten Bettabschnitt 4 in Reihenfolge ein waagerechter Bettabschnitt 14, ein muldenförmiger Bettabschnitt 15 und ein wieder ansteigender Bettabschnitt 16 anschließen, dem ein schmaler waagerechter Bettabschnitt 17 folgt. Alle diese Bettabschnitte bilden einen sich unterhalb des Tisches 5 etwa z-parallel erstreckenden Späne-Trichter 18. Durch einen weiteren Bettabschnitt 19 erhält das Bett 1 eine in der Draufsicht kompakte L-förmige Gestalt. Auf ihm ist eine Werkzeugwechseleinrichtung 20 angeordnet. Sie weist einen auf dem Bettabschnitt 19 x-parallel geführten Schlitten 21, einen auf dem Schlitten 21 z-parallel geführten Schlitten 22 und einen auf dem Schlitten 22 um eine z-parallele Achse drehbar gelagerten Greiferarm 23 auf. Dessen Greifer 24 sind in den Übergabepositionen an der Arbeitsspindel 7 und an dem auf dem Bettabschnitt 25 angeordneten Werkzeugspeicher 26 an nicht dargestellten raumfesten Nocken entriegelbar.

Um das auf dem Tisch 5 angenommene Werkstück zu zerspanen, wird das in der Arbeitsspindel 7 angenommene Werkzeug in den Achsen x und y und der Tisch 5 in der Achse z gesteuert. Die anfallenden Späne gelangen entweder auf die geneigte teleskopartige Führungsbahnabdeckung 10, die es beim Verfahren des Tisches 5 zusammenschiebt bzw. auseinanderzieht, oder den geneigten Bettabschnitt 16. Von dort rutschen Sie bei einem Neigungswinkel von wenigstens 35 Grad unter dem Einfluß der Schwerkraft auf die in der Mulde 15 angeordnete Transportschnecke 11, die die Späne durch eine Drehbewegung mittels nichtdargestelltem Antrieb auf einen vor dem Maschinenbett angeordneten Späneförderer 13 transportiert, dessen mittels nichtdargestelltem Antrieb umlaufendes Förderband in ein innerbetriebliches Entsorgungssystem integriert ist oder über einem Spänekasten mündet. Der Spänetransport erfolgt unterhalb des Arbeitsraumes auf nur einem Transportweg. Ein Aufheizen der Maschine und Störungen des automatischen Betriebs durch Späne sind ausgeschlossen. Kippmomentbedingte Lastbegrenzungen bestehen nicht. Eine hohe Steife ist gewährleistet.

Eines der Gestaltungselemente für das Erzielen einer hohen Steife des Gesamtsystems Bearbeitungszentrum ist der die Werkzeugwechseleinrichtung 20 aufnehmende Bettabschnitt 19. Der Werkzeugwechsel selbst ist durch die extrem kurzen x-Wege der Arbeitsspindel 7 in Bezug auf die Greifer 24 und die Aushub- und Drehbewegung des Greiferarms 23 bestimmt: Die Arbeitsspindel 7 fährt ihr verbrauchtes Werkzeug in x-Richtung in den ersten Greifer 24 ein und löst die Werkzeugspannung. Der Greiferarm 23 fährt das verbrauchte Werkzeug in z-Richtung aus der Arbeitsspindel 7 heraus, dreht um 180 Grad und fährt das neue Werkzeug in die Arbeitsspindel 7 ein. Die Arbeitsspindel 7 spannt das neue Werkzeug und fährt in entgegengesetzter x-Richtung aus dem zweiten Greifer 24 heraus. Der Wechselvorgang, der am Werkzeugmagazin unter Einbeziehung der x-Bewegungen des Greiferarms 23 zum achsparallelen Erfassen und Ablegen des Werkzeuges entsprechend verläuft, findet (spänegeschützt) außerhalb des Arbeitsraumes statt.

## Patentansprüche

1. Werkzeugmaschine, insbesondere Fräs-Bearbeitungszentrum, mit
- einem eine Arbeitsspindel (7) aufnehmenden Ständer (3),
- einer zwischen der Arbeitsspindel (7) und einem Werkzeugmagazin (26) Werkzeuge wechselnden Werkzeugwechseleinrichtung (20) und
- einem auf einem Bett (1) horizontal geführten waagerechten Werkstücktisch (5), dessen Führungen (8, 9) sich auf unterschiedliche Höhen eines unter dem Werkstücktisch (5) angeordneten geneigten ersten Bettabschnittes (4) verteilen,
gekennzeichnet dadurch, daß
- der geneigte erste Bettabschnitt (4) Teil eines Profils (18) ist, dessen eine Stirnseite von der Längsseite eines zweiten Bettabschnittes (2) abgeschlossen wird, der den Ständer (3) aufnimmt.

2. Werkzeugmaschine nach Anspruch 1, gekennzeichnet dadurch, daß das Profil (18) nach oben offen ist.

3. Werkzeugmaschine nach Anspruch 1 oder 2, gekennzeichnet dadurch, daß der Ständer (3) in einer zur Tischbewegung (z) senkrechten Richtung (x) bewegbar ist.

4. Werkzeugmaschine nach einem der Ansprüche von 1 bis 3, dadurch gekennzeichnet, daß die Lastaufnahmeflächen der Führungen (8, 9) waagerecht verlaufen.

5. Werkzeugmaschine nach einem der Ansprüche von 1 bis 4, dadurch gekennzeichnet, daß die Führungen (8, 9) für den Werkstücktisch (5) durch eine an sich bekannte Führungsbahnabdeckung (10), die in gleicher Richtung wie der erste Bettabschnitt (4) geneigt ist, geschützt sind.

6. Werkzeugmaschine nach einem der Ansprüche von 1 bis 5, dadurch gekennzeichnet, daß sich am unteren Ende des geneigten ersten Bettabschnittes (4) ein Spänetransporter (11) erstreckt.

7. Werkzeugmaschine nach Anspruch 6, gekennzeichnet dadurch, daß der Spänetransporter (11) in einer Mulde (15) angeordnet ist, über der die Führungsbahnabdeckung (10) endet und in die ein dem geneigten ersten Bettabschnitt (4) gegenüberliegender gegensinnig geneigter dritter Bettabschnitt (16) mündet.

8. Werkzeugmaschine nach Anspruch 6 oder 7, gekennzeichnet dadurch, daß der Spänetransporter (11) als Transportschnecke ausgebildet ist.

9. Werkzeugmaschine nach einem der Ansprüche von 6 bis 8 , gekennzeichnet dadurch, daß der Spänetransporter (11) auf der ständerabgewandten Seite einen vierten Bettabschnitt (12) durchgreift und über einem Spänebehälter oder einem an sich bekannten Späneförderersystem (13) mündet.

10. Werkzeugmaschine nach Anspruch 9, gekennzeichnet dadurch, daß sich das Späneförderersystem (13) parallel zum zweiten Bettabschnitt (2) erstreckt.

11. Werkzeugmaschine nach einem der Ansprüche von 1 bis 10, gekennzeichnet dadurch, daß sich an den ersten Bettabschnitt (4) in x-Richtung ein fünfter Bettabschnitt (19) anschließt, der mit dem zweiten Bettabschnitt (2) eine L-förmige Deckfläche bildet.

12. Werkzeugmaschine nach Anspruch 11, gekennzeichnet dadurch, daß auf dem fünften Bettabschnitt (19) die Werkzeugwechseleinrichtung (20) angeordnet ist.

13. Werkzeugmaschine nach Anspruch 11 oder 12, gekennzeichnet dadurch, daß sich an den fünften Bettabschnitt (19) in x-Richtung ein sechster Bettabschnitt (25) anschließt, auf dem der Werkzeugspeicher (26) angeordnet ist.

14. Werkzeugmaschine nach Anspruch 12 oder 13, gekennzeichnet dadurch, daß die Werkzeugwechseleinrichtung (20) einen auf dem fünften Bettabschnitt (19) x-parallel geführten ersten Schlitten (21) aufweist, der einen z-parallel geführten zweiten Schlitten (22) trägt, auf dem ein Greiferarm (23), dessen Greifer (24) in den Übergabepositionen an der Arbeitsspindel (7) und am Werkzeugspeicher (26) vorzugsweise an raumfesten Nocken entriegelbar sind, um eine z-parallele Achse drehbar lagert.

15. Werkzeugmaschine nach einem der Ansprüche von 1 bis 14, gekennzeichnet dadurch, daß die sich an die geneigten Bettabschnitte (4, 16) direkt oder in Reihenfolge anschließenden Bettabschnitte (2, 12, 17, 19, 25) eine im wesentlichen geschlossene kubische Form aufweisen.

## Claims

1. Machine tool, in particular milling machining centre, with
- a pillar (3) receiving a work spindle (7),
- a tool changing device (20) changing tools between the work spindle (7) and a tool magazine (26) and
- a horizontal workpiece table (5) which is guided horizontally on a bed (1) and whose guides (8, 9) are distributed at different heights of an inclined first bed portion (4) disposed under the workpiece table (5),
characterised in that
- the inclined first bed portion (4) is part of a profile (18) one end side of which is terminated by the longitudinal side of a second bed portion (2) which receives the pillar (3).

2. Machine tool according to claim 1, characterised in that the profile (18) is open towards the top.

3. Machine tool according to claim 1 or 2, characterised in that the pillar (3) is movable in a direction (x) perpendicular to the table movement (z).

4. Machine tool according to one of claims 1 to 3, characterised in that the load receiving faces of the guides (8, 9) run horizontally.

5. Machine tool according to one of claims 1 to 4, characterised in that the guides (8, 9) for the workpiece table (5) are protected by a guide track cover (10) known per se which is inclined in the same direction as the first bed portion (4).

6. Machine tool according to one of claims 1 to 5, characterised in that a chip transporter (11) extends at the lower end of the inclined first bed portion (4).

7. Machine tool according to claim 6, characterised in that the chip transporter (11) is disposed in a trough (15) over which the guide track cover (10) ends and into which debouches a third bed portion (16) facing the inclined first bed portion (4) and inclined in the opposite direction.

8. Machine tool according to claim 6 or 7, characterised in that the chip transporter (11) is embodied as a transporting screw.

9. Machine tool according to one of claims 6 to 8, characterised in that on the side remote from the pillar the chip transporter (11) passes through a fourth bed portion (12) and debouches over a chip container or a chip conveyor system (13) known per se.

10. Machine tool according to claim 9, characterised in that the chip conveyor system (13) extends parallel to the second bed portion (2).

11. Machine tool according to one of claims 1 to 10, characterised in that in the x direction the first bed portion (4) is adjoined by a fifth bed portion (19) which forms an L-shaped covering surface with the second bed portion (2).

12. Machine tool according to claim 11, characterised in that the tool changing device (20) is disposed on the fifth bed portion (19).

13. Machine tool according to claim 11 or 12, characterised in that in the x direction the fifth bed portion (19) is adjoined by a sixth bed portion (25) on which the tool magazine (26) is disposed.

14. Machine tool according to claim 12 or 13, characterised in that the tool changing device (20) exhibits a first slide (21) which is guided parallel to x on the fifth bed portion (19) and carries a second slide (22) which is guided parallel to z and on which a gripper arm (23) is mounted rotatable about an axis parallel to z and whose grippers (24) can be unlocked in the transfer positions at the work spindle (7) and at the tool magazine (26) preferably at fixed cams.

15. Machine tool according to one of claims 1 to 14, characterised in that the bed portions (2, 12, 17, 19, 25) adjoining the inclined bed portions (4, 16) directly or in sequence exhibit an essentially closed cubic shape.

## Revendications

1. Machine-outil, en particulier pour un centre d'usinage et fraisage, comportant :
- un montant (3) supportant une broche de travail (7),
- un dispositif de changement d'outils (20) changeant des outils entre une broche de travail (7) et un magasin à outils (26), et
- une table à outils (5) horizontale, guidée horizontalement sur un banc (1), dont les guidages (8, 9) se répartissent sur différentes hauteurs d'un premier tronçon de banc (4) incliné, disposé sous la table à outils (5),
caractérisée en ce que
- le premier tronçon de banc (4) fait partie d'un profilé (18) dont une face frontale est fermée par la face longitudinale d'un deuxième tronçon de banc (2) qui supporte le montant (3).

2. Machine-outil selon la revendication 1,
caractérisée en ce que
le profilé (18) est ouvert en direction du haut.

3. Machine-outil selon la revendication 1 ou 2,
caractérisée en ce que
le montant (3) est déplaçable dans une direction (x) perpendiculaire à la direction de déplacement (z) de la table.

4. Machine-outil selon l'un des revendications 1 à 3,
caractérisée en ce que
les surfaces de support de charge des guidages (8, 9) sont orientées horizontalement.

5. Machine-outil selon l'une des revendications 1 à 4,
caractérisée en ce que
les guidages (8, 9) destinés à la table à outils (5) sont protégés au moyen d'un recouvrement de piste de guidage (10) connu en soi, qui est incliné dans la même direction que le premier tronçon de banc (4).

6. Machine-outil selon l'une des revendications 1 à 5,
caractérisée en ce qu'
un transporteur à copeaux (11) s'étend à l'extrémité inférieure du premier tronçon de banc (4) incliné.

7. Machine-outil selon la revendication 6,
caractérisée en ce que
le transporteur à copeaux (11) est disposé dans une auge (15) sur laquelle s'achève le recouvrement de piste de guidage (10) et dans laquelle débouche un troisième tronçon de banc (16), incliné en sens inverse par rapport au premier tronçon de banc (4) incliné.

8. Machine-outil selon la revendication 6 ou 7,
caractérisée en ce que
le transporteur à copeaux (11) est réalisé sous la forme d'une vis de transport.

9. Machine-outil selon l'une des revendications 6 à 8,
caractérisée en ce que
le transporteur à copeaux (11) traverse, du côté opposé à son maintien, un quatrième tronçon de banc (12) et débouche sur un récipient à copeaux ou sur un système de transport de copeaux (13) connu en soi.

10. Machine-outil selon la revendication 9,
caractérisée en ce que
le système de transport de copeaux (13) s'étend parallèlement au deuxième tronçon de banc (2).

11. Machine-outil selon l'une des revendications 1 à 10,
caractérisée en ce qu'
au premier tronçon de banc (4) se raccorde dans la direction x un cinquième tronçon de banc (19) qui constitue une face de recouvrement en forme de L avec le deuxième tronçon de banc (2).

12. Machine-outil selon la revendication 11,
caractérisée en ce que
le dispositif de changement d'outil (20) est disposé sur le cinquième tronçon de banc (19).

13. Machine-outil selon la revendication 11 ou 12,
caractérisée en ce qu'
au cinquième tronçon de banc (19) se raccorde dans la direction x un sixième tronçon de banc (25) sur lequel le magasin à outils (26) est disposé.

14. Machines-outils selon la revendication 12 ou 13,
caractérisée en ce que
le dispositif de changement d'outil (20) présente un premier chariot (21) guidé parallèlement à l'axe x sur le cinquième tronçon de bande (19), chariot qui porte un deuxième chariot (22) guidé parallèlement à l'axe z et sur lequel est monté de façon à pouvoir tourner autour d'un axe parallèle à l'axe z, un bras de préhension (23), dont les éléments de préhension (24) sont déverrouillables, de préférence sur des cames spatialement fixes, aux positions de transfert à la broche de travail (7) et au magasin à outils (26).

15. Machine-outil selon l'une des revendications 1 à 14,
caractérisée en ce que
les tronçons de banc (2, 12, 17, 19, 25), se raccordant directement ou successivement aux tronçons de banc (4, 16) inclinés, présentent une forme cubique pratiquement fermée.
